(19) **Europäisches Patentamt / European Patent Office / Office européen des brevets**

(11) **EP 3 015 902 B1**

(12) **EUROPEAN PATENT SPECIFICATION**

(45) Date of publication and mention
of the grant of the patent:
**18.08.2021 Bulletin 2021/33**

(51) Int Cl.:
**G02B 27/00** (2006.01)  **G02B 13/14** (2006.01)
**G02B 13/04** (2006.01)

(21) Application number: **15184793.6**

(22) Date of filing: **11.09.2015**

(54) **COMPACT MULTISPECTRAL WIDE ANGLE REFRACTIVE OPTICAL SYSTEM**

KOMPAKTE MULTISPEKTRALE, REFRAKTIVE OPTISCHE WEITWINKELSYSTEME

SYSTÈME OPTIQUE DE RÉFRACTION À GRAND ANGLE MULTISPECTRALE COMPACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.10.2014 GB 201419103**

(43) Date of publication of application:
**04.05.2016 Bulletin 2016/18**

(73) Proprietor: **Qioptiq Limited**
**Denbighshire LL17 0LL (GB)**

(72) Inventor: **THOMPSON, Nicholas Allan**
**St. Asaph, Denbighshire LL17 0LL (GB)**

(74) Representative: **Guardian**
**IP Consulting I/S**
**Diplomvej, Building 381**
**2800 Kgs. Lyngby (DK)**

(56) References cited:
**US-A1- 2014 139 926**

- **ERIC HERMAN ET AL: "System design process for refractive simultaneous short and long wave infrared imaging", APPLIED OPTICS, OPTICAL SOCIETY OF AMERICA, WASHINGTON, DC; US, vol. 52, no. 12, 20 April 2013 (2013-04-20), pages 2761-2772, XP001581970, ISSN: 0003-6935, DOI: HTTP://DX.DOI.ORG/10.1364/AO.52.002761**
- **THOMPSON NICHOLAS ALLAN ED - DRIGGERS RONALD G: "Optical design of common aperture, common focal plane, multispectral optics for military applications", OPTICAL ENGINEERING, SOC. OF PHOTO-OPTICAL INSTRUMENTATION ENGINEERS, BELLINGHAM, vol. 52, no. 6, 1 June 2013 (2013-06-01), page 61308, XP060025851, ISSN: 0091-3286, DOI: 10.1117/1.OE.52.6.061308 [retrieved on 2013-02-07]**
- **BEZDIDKO SERGEY N ET AL: "Development of multi-spectral lenses for thermal imaging technique", CURRENT DEVELOPMENTS IN LENS DESIGN AND OPTICAL ENGINEERING XII; AND ADVANCES IN THIN FILM COATINGS VII, SPIE, 1000 20TH ST. BELLINGHAM WA 98225-6705 USA, vol. 8128, no. 1, 8 September 2011 (2011-09-08), pages 1-11, XP060019789, DOI: 10.1117/12.894548 [retrieved on 1901-01-01]**
- **None**

**Description**

FIELD OF THE INVENTION

The present invention relates to optics, and more particularly, is related to short wavelength and long wavelength infrared optics.

BACKGROUND OF THE INVENTION

A multi spectral system may be used to detect electromagnetic radiation across two portions of the spectrum. The short wave infrared (SWIR) spectrum extends between approximately $0.9\mu m$ and $1.7\mu m$. The long wave infrared (LWIR) spectrum extends between approximately $8\mu m$ and $12.0\mu m$.

A SWIR scene is intuitive to a human user, being predominately reflected radiation and therefore similar to a black and white visible scene. However, since SWIR is longer in wavelength than visible light, it is capable of propagating further than visible light through the atmosphere relatively scatter free. It is also possible for SWIR wavelengths to pass through smoke and haze to a greater extent than visible wavelengths.

A LWIR scene is predominantly self-emissive and is therefore ideal for detecting thermal signatures within a scene. The functionality of such systems is not affected by being in complete darkness. The nature of self-emissive imagery can make it harder to interpret by the human user.

By combining these two wavebands, it is possible to achieve visible type imagery that is less obscured by real-world conditions, for example, battle obscurants and haze in which thermal signatures are highlighted. In previous multispectral systems the detection of SWIR and LWIR wavebands has been achieved using separate optical trains, where each optical train focuses a single waveband onto a separate focal plane. The signals are then overlaid before presentation to the user. One area in which multispectral detection is of particular interest is in helmet mounted goggle systems. Two critical parameters in helmet mounted systems are the mass and the size of the systems.

One way to achieve achromatic correction across the two wavebands is to use a purely reflective design. However, because goggle systems require large fields of view (typically around 40° or greater) and very fast f-numbers (typically around f/1.2 or less) it is unlikely that a purely reflective design satisfying these parameters will be compact enough for some applications. Therefore, there is a need in the industry to overcome one or more of the abovementioned shortcomings.

Relevant prior art can be found in US2014/139926A1 and in Thompson "Optical design of common aperture, common focal plane, multispectral optics for military applications", Optical Engineering, 52(6), 061308 (2013).

SUMMARY OF THE INVENTION

Embodiments of the present invention provide a compact multispectral wide angle refractive optical system. Briefly described, the present invention is directed to a multispectral wide angle refractive optical device for focusing light from a first waveband and a non-overlapping second waveband as defined in claim 1. A first element formed of a first material receives incident radiation. A second element formed of diamond material receives radiation from the egress end of the first element. A third element formed of a third material receives radiation from the egress end of the second element. An optical train including the three elements is shared by the first waveband and a second waveband to a common focal plane.

According to the invention, the first element ingress surface is aspherical; the first element egress surface is aspherical;

the third element ingress surface is aspherical; and the third element egress surface is aspherical.

According to the invention, the second element ingress surface is spherical and/or the second element egress surface is spherical.

According to an embodiment of the refractive multispectral wide angle refractive optical device, at least one of the second element ingress surface and the second element egress surface is aspherical.

The refractive multispectral wide angle refractive optical device may further comprise a housing configured to mount the first element, the second element, and the third element. The housing may in some embodiments provide a first gap between the first element and the second element, and a second gap between the second lens and the third lens.

Pairings for the first material and third material may comprise one of the group of material pairings including GaAs/infrared Chalcogenide glass (IR Chalcogenide), GaAs/ZnSe, ZnSe/GaAs, ZnSe/ IR Chalcogenide, ZnS/GaAs, ZnS/IR Chalcogenide, and ZnS/ZnSe.

According to yet another embodiment of the refractive multispectral wide angle refractive optical device, a media in the first gap and/or the second gap comprises air.

The chromatic properties of two of the group consisting of the first material, the second material, and the third material may combine to form an imaginary material with dispersion characteristics, which complement the remaining material of the group.

According to another embodiment of the refractive multispectral wide angle refractive optical device the first waveband and the second waveband are not contiguous.

The second element may in some embodiments be a compound element comprising a first piece and a second piece.

A second aspect of the present invention relates to a method for forming a multispectral wide angle refractive optical device for focusing light from a first waveband comprising a minimum wavelength $\lambda_{min}$, and a second waveband comprising a maximum wavelength $\lambda_{max}$ on a common focal plane as defined in claim 10. The method comprises the steps of:

selecting a first material for a first lens and selecting a third material for a third lens based upon $\lambda_{min}$ and $\lambda_{max}$;
forming the first lens from the first material comprising an ingress surface and an egress surface;
forming a second lens comprising an ingress surface and an egress surface from a second material; and
forming the third lens comprising an ingress surface and an egress surface from the third material,
wherein $\lambda_{min}$ is less than $\lambda_{max}$, and the second material comprises diamond, and the first and third material are selected to, along with the second material, focus the first and the second waveband on a common focal plane.

The first lens ingress surface and the third lens ingress surface comprise an aspherical ingress surface, and the first lens egress surface and the second lens egress surface comprise an aspherical egress surface.

The second lens ingress surface may be spherical and/or the second lens egress surface may be spherical.

According to one embodiment of the present method for forming a multispectral wide angle refractive optical device, said selecting the first and/or third material further comprises determining an Abbe number V with the equation

$$V = \left( \frac{n_{\lambda,mid} - 1}{n_{\lambda,min} - n_{\lambda,max}} \right)$$

wherein $n_{\lambda,mid}$ is a refractive index of the material at a harmonic mean $\lambda_{mid}$ of $\lambda_{min}$ and $\lambda_{max}$, $n_{\lambda,min}$ is a refractive index of the material at $\lambda_{min}$, and $n_{\lambda,max}$ is a refractive index of the material at $\lambda_{max}$.

This selection of the first and/or third material may further comprise: determining a partial dispersion $P_\lambda$ of the material between a wavelength $\lambda$ and $\lambda_{min}$ with the equation

$$P_\lambda = \left( \frac{n_{\lambda,min} - n_\lambda}{n_{\lambda,min} - n_{\lambda,max}} \right).$$

The first waveband may comprise a short wave infrared waveband and the second waveband may comprise a long wave infrared waveband.

Pairings for the first material and third material may comprise one of the group of material pairings including GaAs/infrared Chalcogenide glass (IR Chalcogenide), GaAs/ZnSe, ZnSe/GaAs, ZnSe/ IR Chalcogenide, ZnS/GaAs, ZnS/IR Chalcogenide, and ZnS/ZnSe.

According to one embodiment of the present method for forming a multispectral wide angle refractive optical device, the first waveband and the second waveband are not contiguous.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principals of the invention.

FIG. 1 is a simplified schematic diagram of a refractive multispectral wide angle refractive optical device.

FIG. 2 is a schematic diagram of a first embodiment refractive multispectral wide angle optical device.

FIG. 3 is a schematic diagram of a second embodiment refractive multispectral wide angle optical device.

FIG. 4A is a partial dispersion plot for the LWIR highlighting areas having candidates for materials 1 and 3.

FIG. 4B is a partial dispersion plot for the SWIR highlighting areas having candidates for materials 1 and 3.

FIG. 5 is a cutaway schematic diagram of an exemplary optical device in a housing.

FIG. 6 is a flowchart of an exemplary method for forming a multispectral wide angle refractive optical device.

DETAILED DESCRIPTION

The following definitions are useful for interpreting terms applied to features of the embodiments disclosed herein, and are meant to define elements within the disclosure. As used within this disclosure, "wide angle" generally refers to a field of view of 30 degrees or more, preferably 40 degrees or more.

As used within this disclosure, very fast f-numbers refer to f-numbers of f/1.3 or faster, for example, f/1.2, f/1.1, f/1.0, or faster.

As used within this disclosure, "optics" refers to one or more elements configured to convey and/or process radiation, both within and beyond the visible spectrum. Such processing may include, but is not limited to, reflection, focusing, diversion, filtering, refraction, dispersion, and other processing of radiation.

As used within this disclosure, a "stop" refers to the aperture size of an optical system, controlling the beam width which the system can pass and is corrected for.

As used within this disclosure, "thin lenses" refers to lenses with zero center thickness, for example, located at the limiting aperture (stop) of the system. This mathematical simplification reduces the problem such that the aberrations become easier to analyze, and holds true to the first order so that the basic principles can be conveyed.

As used within this disclosure, a "planar" surface may be thought of as a spherical surface with a substantially infinite radius of curvature.

As used within this disclosure, "aspherical" refers to a surface profile, for example a lens profile, that is not a portion of a sphere or cylinder.

Reference will now be made in detail to embodiments of the present invention, examples of which are illustrated in the accompanying drawings. Wherever possible, the same reference numbers are used in the drawings and the description to refer to the same or like parts.

Exemplary embodiments of the present invention provide a wide angle objective lens having a single optical train for detecting both SWIR and LWIR wavebands. These embodiments provide a material combination to achieve a compact refractive solution to the aforementioned challenges. The layout may be thought of in terms of thin lenses in contact at the stop. The chromatic properties of a first material and a second material combine to form an imaginary material with dispersion characteristics which complement a third material. The use of diamond as the second (central) material in a three material design allows the user to achieve a very well corrected, fast, compact, wide angle system.

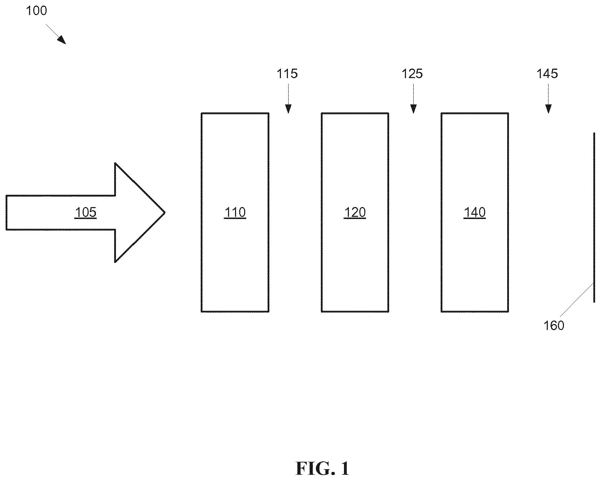

FIG. 1 is a schematic diagram showing a simplified form of a first embodiment 100 of the current invention. Incident radiation 105 passes through a first element 110 formed of a first material, a second element 120 formed of a second material, and a third element 140 formed of a third material. The materials of the first, second and third elements 110, 120, 140 are chosen such that the elements 110, 120, 140 combine to focus the incident radiation 150 upon a focal plane 160. There may be a first gap 115 between the first element 110 and the second element 120, and/or a second gap 125 between the second element 120 and the third element 140. The focal plane 160 may be spaced apart from the third element 140 by a third gap 145.

The materials and optical design for the elements 110, 120, 140 are considered to provide SWIR/LWIR common aperture and common focal plane imaging systems. Other considerations include system survivability in harsh environments. The f-number of each example system may be reduced as much as possible while maintaining what is considered a sensible solution for manufacturing purposes.

In general, the smaller the f-number is, the "faster" the system is. Therefore, a system having a smaller f-number allows more light (via a larger aperture) into the system than a system having a larger f-number. Decreasing the f-number is desirable in some respects. For example, detection range increases, while NETD (Noise Equivalent Temperature Difference) of the system decreases. However decreasing the f-number of the system also imparts several difficulties. For example, the size of the elements increases in diameter and likely in center thickness to achieve a reasonable edge thickness, resulting in likely increases in the cost of the system. Further, both chromatic and non-chromatic aberrations become harder to control, possibly introducing further complexity to the system. In addition, the sensitivity of the system to manufacturing tolerances will generally increase.

As noted above, the optical layout consists of three materials. The first element 110 and the third element 140 are each dual aspheric. The material for the second element 120 is diamond. As described further below, the second element 120 may be a combination of two or more sub-elements, for example, to simplify manufacturing and reduce costs. The material of the second (central) element 120 (diamond) acts as the main positive optical power contributor to the system 100.

As previously stated, the chromatic properties of two of the materials in the system combine to form an imaginary material with chromatic properties which complement the third. It is desirable that the materials for the first element 110 and third element 140 lend themselves to the manufacture of aspheres. By making these external components aspheric, the correction of non-chromatic aberration is possible, allowing the f-number of the system to be reduced while maintaining a small form factor, for example, comparable in size and shape to existing single band solutions.

As noted above, the material for the second element 120 is generally diamond. In contrast, the choice of materials for the first element 110 and the third element 140 may be relatively relaxed. To demonstrate this, a multispectral Abbe number, V, is defined using the two extreme wavelengths ($\lambda_{min}$ and $\lambda_{max}$) and the refractive index of the material at these wavelengths ($n_{\lambda,min}$, $n_{\lambda,max}$). $\lambda_{min}$ represents the lowest wavelength of interest, in this case, the bottom of the SWIR band, and $\lambda_{max}$ represents the highest wavelength of interest, in this case, the top of the LWIR band. The central wavelength, $\lambda_{mid}$, represents the harmonic mean of the wavelengths between the wavebands of interest. V is determined by

$$V = \left( \frac{n_{\lambda,mid} - 1}{n_{\lambda,min} - n_{\lambda,max}} \right) \quad \text{(Eq. 1).}$$

In order to evaluate the color correction of a system, a partial dispersion, $P_\lambda$ of the material is defined from $\lambda_{min}$. The partial dispersion between the wavelengths $\lambda_{min}$ and $\lambda$ is determined by

$$P_\lambda = \left( \frac{n_{\lambda,min} - n_\lambda}{n_{\lambda,min} - n_{\lambda,max}} \right) \quad \text{(Eq. 2).}$$

For the SWIR and LWIR wavebands this, means that

$$\lambda_{min} = 0.9\mu m \qquad \lambda_{max} = 12.0\mu m \qquad \lambda_{mid} = 2.8\mu m$$

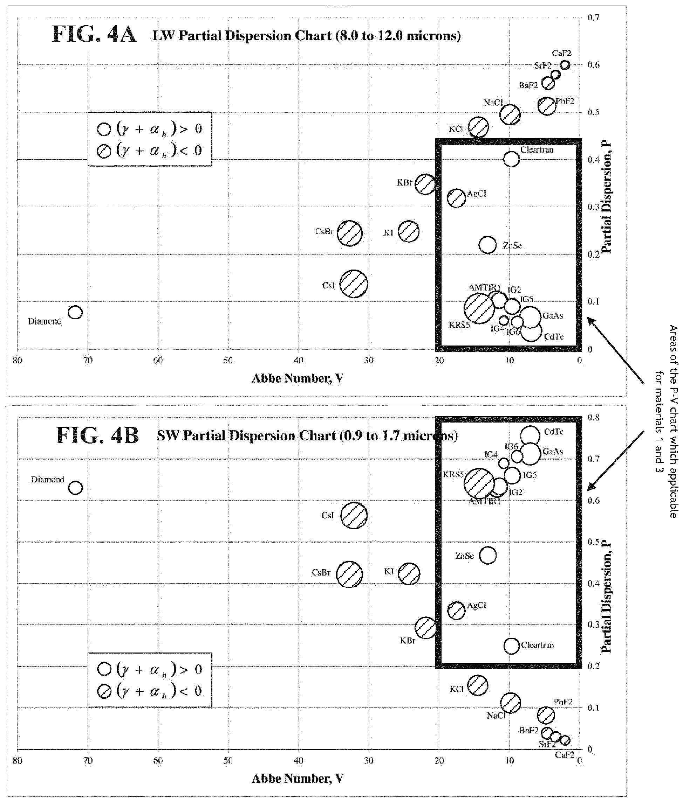

As shown in FIGS. 4A and 4B, Eq. 1 and Eq. 2 may be used to form partial dispersion plots for the LWIR waveband (FIG. 4A) and SWIR waveband (FIG. 4B) by taking $\lambda$ to be the edge of the waveband in question closest to $\lambda_{mid}$. For each plot, the region in which materials would fall if they would be applicable for use as either material for the first element 110 (FIG. 1) or material for the third element 140 (FIG. 1) is indicated by a dark lined rectangle. The SWIR and the LWIR are the two wavebands which have been targeted in the design. These wavebands are not contiguous, the longest wavelength of the SWIR being around 1.7 microns and the shortest wavelength of the LWIR being around 8 microns. In FIGS. 4A and 4B $\alpha_h$ indicates the coefficient of thermal expansion of a material housing the elements 110, 120, 140 (FIG. 1), while $\gamma$ is the thermal glass coefficient.

Further details on the theory may be found in the June 2013 Optical Engineering paper by Nicholas Allan Thompson, entitled "Optical design of common aperture, common focal plane, multispectral optics for military applications," which is hereby incorporated by reference in its entirety. This paper deals with the general theory for material selection and examples are given for narrow angle solutions. In contrast, the embodiments discussed herein refer specifically to wide angle solutions.

Having a wide range of materials available to choose from for the first element 110 (FIG. 1) and the third element 140 (FIG. 1) allows the designer of an optical device to use materials with more advantageous mechanical properties for particular applications of the device. For example, in applications where the first element 110 (FIG. 1) is exposed to adverse and/or extreme environmental conditions, the material for the first element may be selected as having desirable mechanical characteristics best suited to the conditions where the device will be used. One preferred combination is as follows;

| First Element Material | Gallium Arsenide (GaAs) |
| Second Element Material | Diamond (C) |
| Third Element Material | IG2 |

GaAs is a physically resilient material and as such would be particularly useful as an external element. Other possible combinations for first/third element materials to be used in conjunction with a diamond second element material include, but are not limited to, GaAs/ZnSe, ZnSe/GaAs, ZnSe/ [IR Chalcogenide], ZnS/GaAs, ZnS/[IR Chalcogenide], and ZnS/ZnSe. It should be noted there are several IR Chalcogenides that may be suitable.

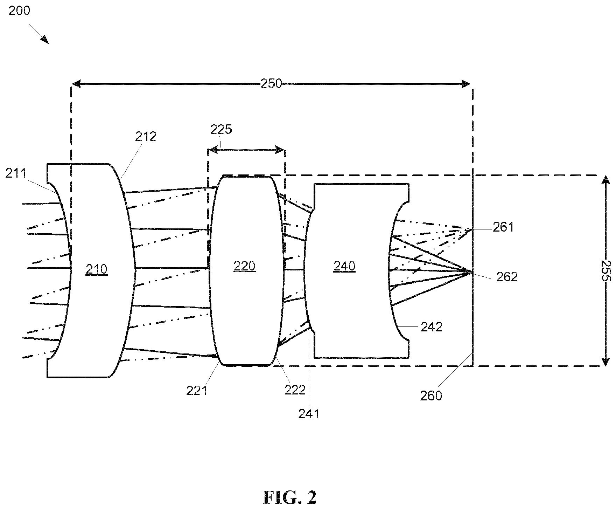

An example of the layout which employs this particular material combination is shown in FIG. 2. FIG. 2 shows a more detailed drawing than FIG. 1 of the first embodiment. The optical device 200 includes a first element 210, a second element 220, and a third element 240. Incident radiation enters the device 200 through an ingress surface 211 of the first element 210. The ingress radiation may include many wavelengths originating from a single object in the scene which the objective is looking at. For simplicity, FIG. 2 shows a first field angle shown as a dash-dot-dot line and a second field angle, shown as a solid line. The radiation from these field angles, in both wavebands of interest, enters the first element 210 and is then focused onto a single focal plane 260. The ingress radiation exits the first element 210 through an egress surface 212, and travels through an intermediate media, for example, air or a vacuum, to an ingress surface 221 of the second element 220. The radiation then enters the second element 220 via the second element ingress surface 221, and exits the second element 220 via the second element egress surface 222.

Upon exiting the second element 220, the radiation is directed through a medium between the second element 220 and the third element 240, for example, air or vacuum. The radiation then enters an ingress surface 241 of the third element 240, and exits the third element 240 via an egress surface 242, directed toward a focal plane 260. The focal plane 260 may coincide with, for example, an image sensing surface or detector.

Ideally the focus on the focal plane 260 will be at the same image height on the detector for both wavebands, although the distortion and/or focal length may vary slightly between wavebands which would cause the focus to be at slightly different image heights. Preferably, this would be minimized by the system designer.

Under the first embodiment, the first element ingress surface 211 may be a concave aspherical surface, while the first element egress surface 212 may be a convex aspherical surface. The diamond second element ingress surface 221 may be a convex spherical surface, and the second element egress surface 222 may also be a convex spherical surface. The third element ingress surface 241 may be a convex aspherical surface, while the third element egress surface 242 may be a concave aspherical surface.

As used within this disclosure, persons having ordinary skill in the art will realize that the terms "convex" and "concave" can be ambiguous with the use of aspheres. For example with the layout presented in FIG. 2, the external surface 211 (ingress surface of the front element) will "want" to be concave for aberration correction. The edge of the surface is proud of the center of the surface and the underlying base curvature is such that if the aspheric terms were removed the surface would still curve in that direction. However it may be desirable to force the underlying curvature to curve in the opposite direction while the aspheric terms compensate and keep the edge of the surface proud of the center. In these circumstances, the surface would still look concave, but the initial direction of curvature (and underlying base curvature) would imply that the surface is convex. This can be further complicated by forcing the edge to fall below the center of the surface. In such an instance, the edge of the lens still curves outwards, but does not become proud of the center of the surface. In forcing this situation the correction of the system is compromised to a degree. This correction can be regained by the inclusion of an asphere on one of the diamond surfaces.

Practically, a stop may be placed on (or near to) the diamond element(s) to minimize their size. Preferably an asphere may be included on the surface closest to the stop as it is best placed to correct pupil dependent aberrations. However, practical considerations make it difficult to create even spherical lenses in diamond, so it may be desirable to avoid the use of aspheres on diamond. Accordingly, other lens configurations are possible, for example, changing the curvature of a lens from aspheric to plano, subject to the resulting effects described above, among others.

The combination of characteristics of the element 210, 220, 240 materials and the lens shape of the first, second and third elements 210, 220, 240 results in directing radiation of different object angles to different portions of the focal plane 260. For example, as shown by FIG. 2, the first field angle shown as a dash-dot-dot line is generally directed toward a first portion 261 of the focal plane 260, and the second field angle, shown as a solid line is generally directed toward a second portion 262 of the focal plane 260. Both wavebands will be focused at any given image height. While the focal plane 260 is depicted as a flat planar surface, in alternative embodiments the focal plane 260 may not be planar, but instead have a different topography, for example, but not limited to, a concave or convex spherical surface, or a concave or convex aspherical surface.

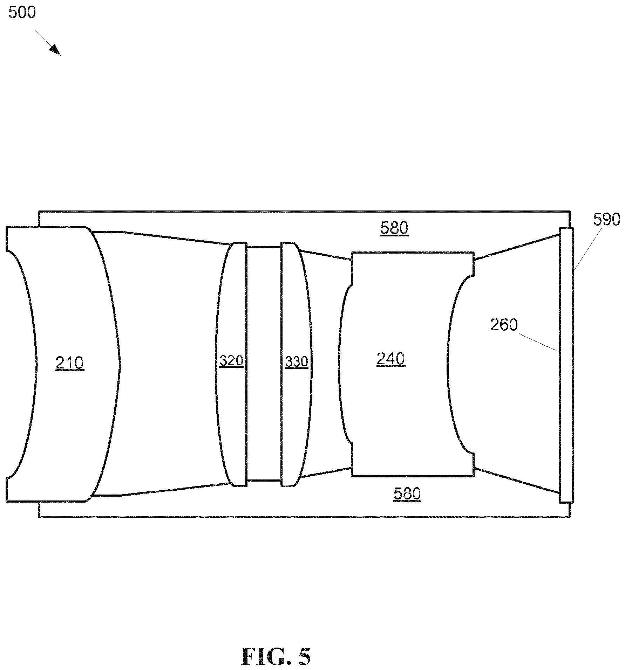

The first element 210, the second element 220, and the third element 240 may be mounted within a housing 580 (FIG. 5) to maintain their positions relative to one another, and to prevent particles and debris between the elements 210, 220, 240 and the focal plane 260. The geometry of the elements impacts the radiation paths, as is familiar to persons having ordinary skill in the art. For example, the distance 250 between the first element ingress surface and the focal plane 260, the distance 225 between the second element ingress surface 221 and the second element egress surface 222, and the diameter 255 of the second element, may be adjusted according to the specific configuration needs of the implementation.

In addition, the spacing between the first, second, and third elements 210, 220, 240 may also factor into the focal positions of different field angles on the focal plane 260. The layout can be thought of from first principles. As mentioned previously, for thin elements (lenses) in contact at the stop, the chromatic properties of two of the three materials combine to form an imaginary material with dispersion characteristics which complement the third material. This principle holds true for the layouts described. Some exemplary system parameters are shown for three different detector resolution and pixel pitch configurations in the table 1 below.

TABLE 1

| | (640x480) 12 $\mu$m | (320x240) 25 $\mu$m | (320x240) 20 $\mu$m |
|---|---|---|---|
| F# | 1.2 | | |
| EFL | 10.81 | | |
| OAL | 24.1 | | |
| Semi VFOV | 15.1 | 15.8 | 12.7 |
| Semi HFOV | 20 | 20.8 | 16.8 |
| Semi CFOV | 24.7 | 25.6 | 20.8 |

In TABLE 1, EFL is the effective focal length in mm, OAL is the overall length in mm, VFOV is the vertical field of view, HFOV is the horizontal field of view in degrees, and CFOV is the corner field of view of the detector in degrees.

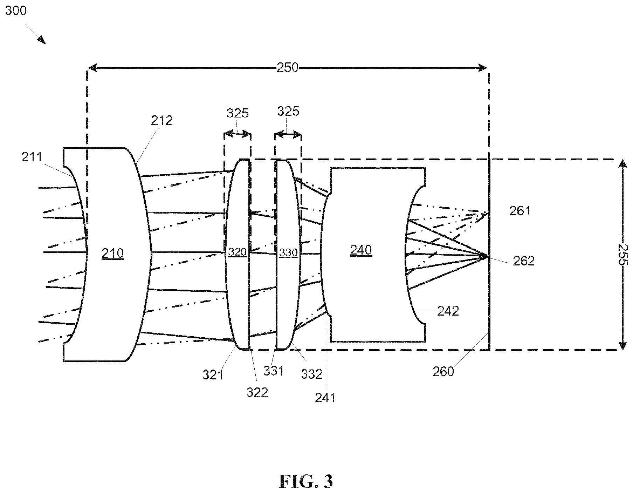

FIG. 3 shows a second embodiment of an optical system. The second embodiment is substantially similar to the first embodiment, where the one piece second element 220 (FIG. 2) of the first embodiment is replaced by a two-piece second element 320, 330, including an ingress piece 320 and an egress piece 330. The pieces 320, 330 of the two piece second element may be substantially similar, where they both have the same diameter 255, and the same thickness 325. The ingress piece ingress surface 321 may be substantially similar to the ingress surface 221 (FIG. 2) of the first embodiment, and the egress piece egress surface 332 may be substantially similar to the egress surface 222 (FIG. 2) of the first embodiment. An egress surface 322 of the ingress piece 320 may be substantially planar. Similarly, an ingress surface 331 of the egress piece 330 may be substantially planar. The two-piece second element 320, 330 may be functionally similar to the one-piece second element 220 (FIG. 2) of the first embodiment, but may be preferable for manufacturing purposes. For example, the diamond material used for the second elements 220 (FIG. 2), 320, 330 is relatively expensive, and a two piece second element 320, 330 may use less diamond material than a one-piece second element 220 (FIG. 2). In addition, the manufacturing of a two piece second element 320, 330 where each piece has one planar surface 322, 331 may be easier to manufacture than a one-piece second element 220 (FIG. 2) having two spherical surfaces 221, 222.

Under the second embodiment 300, the distance 250 between the first element ingress surface and the focal plane 260 may be approximately 24.1 mm, and the thickness 325 of each piece 320, 330 of the two piece second element may be approximately 1.5 mm, where of each piece 320, 330 of the two piece second element both have the same diameter 255, of approximately 13.0 mm. Of course, the second embodiment is not limited to these dimensions, and other dimensions are possible.

FIG. 5 is a cutaway schematic diagram of the second embodiment optical device in an exemplary housing 580. The housing 580 may have a substantially cylindrical exterior, with the interior configured to secure the elements 210, 320, 330, 240 within the housing 580. The elements 210, 320, 330, 240 may be affixed directly to the housing 580, or may be secured to the housing 580, for example, with padding and spacers and the like. The housing 580 may be one-piece, as shown, or may include multiple components attached together. The focal plane 260 may be the surface of an optical sensor 590.

The material used for the housing 580 is preferably relatively light, strong and chemically stable. For example, the housing 580 may be formed of aluminum. The grade of aluminum used may vary slightly depending on the application. Other housing materials may provide different benefits. For example, some materials may be lighter, some may be stronger, and others may have more beneficial coefficients of thermal expansion (CTE). As noted previously, $\alpha_h$ in FIGS. 4A and 4B indicates the coefficient of thermal expansion of a material housing the elements. The use of a different housing material may eliminate the need for thermal spacers to achieve athermal performance.

The overall size and form of the device 500 may be similar to that of a conventional situational awareness or goggle objective which works in only one waveband. However, the use of diamond material for the second (central) element 320, 330 allows the imaging capability to be extended to a second waveband.

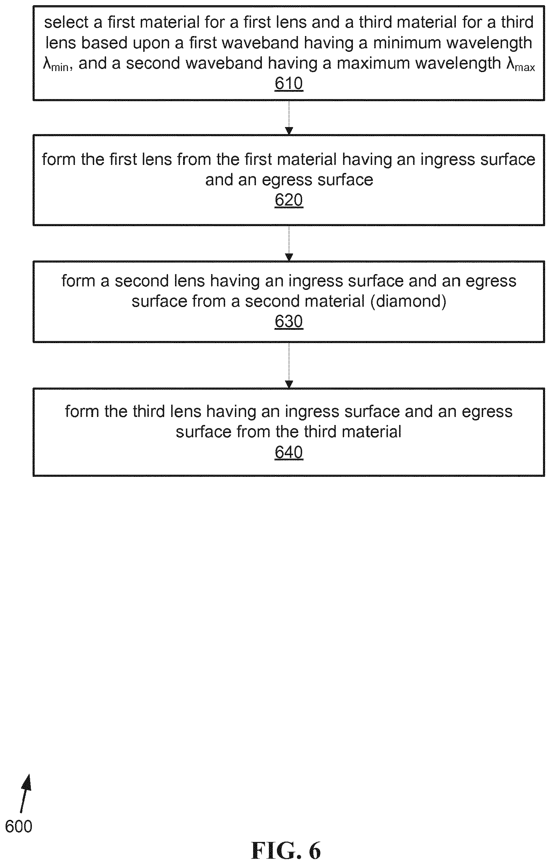

An exemplary method 600 for forming a multispectral wide angle refractive optical device is shown in FIG. 6. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

A first material is selected for a first lens 110 (FIG. 1) and a third material is selected for a third lens 140 (FIG. 1) based upon a first waveband having a minimum wavelength $\lambda_{min}$, and a second waveband having a maximum wavelength $\lambda_{max}$, as shown by block 610. The first lens 110 (FIG. 1) is formed from the first material having an ingress surface and an aspherical egress surface, as shown by block 620, for example, an aspherical ingress surface. A second lens 120 (FIG. 1) having an ingress surface and an egress surface is formed from a second material (diamond), as shown by block 630, for example, a spherical ingress surface and a spherical egress surface. The third lens 140 (FIG. 1) is formed from the third material having an ingress surface and an egress surface, as shown by block 640, for example, an aspherical ingress surface and an aspherical egress surface.

Among other advantages of the above embodiments, there is a potential for significant mass reduction compared with previous systems for resolving multiple wavebands. This presents the significant challenge of achieving color correction across two wavebands simultaneously in a wide angle system.

While diamond lenses have been produced previously which would be similar in form and size to those in the above embodiments, the use of diamond lenses as the central component of an optical scheme which allows WFOV imaging of multiple wavebands onto a common focal plane is new. The central diamond component(s) allow the chromatic correction for the two wavebands. Materials 1 and 3 can be changed for other materials which transmit in both the SWIR and the LWIR provided that they lend themselves to the manufacture of aspherical surfaces.

Depending on considerations such as material selection for exposed portions of the system and selection of internal materials such as lenses and/or spacers, the design of the system can be made slightly more or less athermal. With proper housing/spacer material selection the design may be made passively mechanically athermal, allowing the optical performance to be maintained across a large temperature range.

While an exemplary objective for the above embodiments includes usage in goggles, persons having ordinary skill in the art will recognize the principles may be applied for other applications, for example, situational awareness objectives and Drivers Vision Enhancement (DVE) objectives.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims.

## Claims

1. A refractive multispectral wide angle refractive optical device (100, 200, 300) for focusing light from a first waveband short wave infrared having a minimum wavelength $\lambda_{min}$, and a non-overlapping second waveband long wave infrared having a maximum wavelength $\lambda_{max}$, comprising:

   a first lens (210) formed of a first material comprising an ingress surface (211), configured to receive incident radiation, and an egress surface (212);
   a second lens (220) formed of a second material comprising an ingress surface (221), configured to receive radiation from the egress surface (212) of the first lens, and an egress surface (222);
   a third lens (240) formed of a third material comprising an ingress surface (241), configured to receive radiation from the egress surface (222) of the second lens, and an egress surface (242);
   a shared optical train for the first waveband and a second waveband, the shared optical train having an aperture common to the first element, the second element, and the third element; and
   a common focal plane (260) for the first waveband and a second waveband,
   wherein the first waveband is in the range of 0.9 $\mu$m and 1.7 $\mu$m and the second waveband is in the range of 8 $\mu$m and 12.0 $\mu$m, wide angle refers to a field of view of at least 30 degrees, the second material comprises diamond and acts as a main positive optical power contributor of the first, second, and third lenses, and the first material, second material, and third material are different materials, wherein the first lens ingress surface (211) is aspherical;
   the first lens egress surface (212) is aspherical;
   the third lens ingress surface (241) is aspherical;
   the third lens egress surface (242) is aspherical; and
   wherein the second lens ingress surface (221) is spherical and/or the second lens egress surface (222) is spherical.

2. The device (100, 200, 300) of claim 1, wherein at least one of the second lens ingress surface (221) and the second lens egress surface (222) is aspherical.

3. The device (100, 200, 300) according to any of the preceding claims, further comprising a housing (580) configured to mount the first lens (210), the second lens (220), and the third lens (240).

4. The device (100, 200, 300) of claim 3, wherein the housing (580) provides a first gap between the first lens (210) and the second lens (220), and a second gap between the second lens (220) and the third lens (240).

5. The device (100, 200, 300) according to any of the preceding claims, wherein pairings for the first material and third material comprise one of the group of material pairings including GaAs/infrared Chalcogenide glass (IR Chalcogenide), GaAs/ZnSe, ZnSe/GaAs, ZnSe/ IR Chalcogenide, ZnS/GaAs, ZnS/IR Chalcogenide, and ZnS/ZnSe.

6. The device (100, 200, 300) of claim 4, wherein a media in the first gap and/or the second gap comprises air.

7. The device (100, 200, 300) according to any of the preceding claims, wherein the chromatic properties of two of the group consisting of the first material, the second material, and the third material combine to form an imaginary material with dispersion characteristics, which complement the remaining material of the group.

8. The device (100, 200, 300) according to any of the preceding claims, wherein the first waveband and the second waveband are not contiguous.

9. The device (100, 200, 300) according to any of the preceding claims, wherein the second lens (220) is a compound lens comprising a first piece and a second piece.

10. A method for forming a multispectral wide angle refractive optical device (100, 200, 300) for focusing light from a first waveband short wave infrared comprising a minimum wavelength $\lambda_{min}$, and a second waveband long wave infrared comprising a maximum wavelength $\lambda_{max}$ on a common focal plane, comprising the steps of:

    selecting a first material for a first lens and selecting a third material for a third lens based upon $\lambda_{min}$ and $\lambda_{max}$;
    forming the first lens (210) from the first material comprising an ingress surface and an egress surface;
    forming a second lens (220) comprising an ingress surface and an egress surface from a second material; and
    forming the third lens (240) comprising an ingress surface and an egress surface from the third material,
    wherein $\lambda_{min}$ is less than $\lambda_{max}$, and the first waveband is in the range of 0.9 $\mu$m and 1.7 $\mu$m and the second waveband is in the range of 8 $\mu$m and 12.0 $\mu$m, wide angle refers to a field of view of at least 30 degrees, the second material comprises diamond and acts as a main positive optical power contributor of the first, second, and third lenses, and the first and third material are selected to, along with the second material, focus the first and the second waveband on a common focal plane (260),
    wherein the first lens ingress surface (211) and/or the third lens ingress surface (241) comprises an aspherical ingress surface, and the first lens egress surface (212) and/or the second lens egress surface (222) comprises an aspherical egress surface; or the second lens ingress surface (221) is spherical and/or the second lens egress surface (222) is spherical.

11. The method of claim 10, wherein said selecting the first and/or third material further comprises determining an Abbe number V with the equation

$$V = \left( \frac{n_{\lambda,mid} - 1}{n_{\lambda,\min} - n_{\lambda,\max}} \right)$$

wherein $n_{\lambda,mid}$ is a refractive index of the material at a harmonic mean $\lambda_{mid}$ of $\lambda_{min}$ and $\lambda_{max}$, $n_{\lambda,min}$ is a refractive index of the material at $\lambda_{min}$, and $n_{\lambda,max}$ is a refractive index of the material at $\lambda_{max}$.

12. The method of claim 11, wherein said selecting the first and/or third material further comprises determining a partial dispersion $P_{\lambda}$ of the material between a wavelength $\lambda$ and $\lambda_{min}$ with the equation

$$P_\lambda = \left( \frac{n_{\lambda,\min} - n_\lambda}{n_{\lambda,\min} - n_{\lambda,\max}} \right) .$$

13. The method according to any of claims 10-12, wherein the first waveband comprises a short wave infrared waveband, and the second waveband comprises a long wave infrared waveband.

14. The method according to any of claims 10-13, wherein pairings for the first material and third material comprise one of the group of material pairings including GaAs/infrared Chalcogenide glass (IR Chalcogenide), GaAs/ZnSe, ZnSe/GaAs, ZnSe/ IR Chalcogenide, ZnS/GaAs, ZnS/IR Chalcogenide, and ZnS/ZnSe.

15. The method according to any of claims 10-14, wherein the first waveband and the second waveband are not contiguous.

**Patentansprüche**

1. Refraktive multispektrale optische Weitwinkel-Brechungsvorrichtung (100, 200, 300) zum Fokussieren von Licht aus einem ersten Wellenband-Kurzwelleninfrarot mit einer minimalen Wellenlänge $\lambda_{min}$ und einem nicht überlappenden zweiten Wellenband-Langwelleninfrarot mit einer maximalen Wellenlänge $\lambda_{max}$, umfassend:

eine erste Linse (210), die aus einem ersten Material gebildet ist, umfassend eine Eintrittsoberfläche (211), die zum Empfangen einfallender Strahlung konfiguriert ist, und eine Austrittsoberfläche (212);
eine zweite Linse (220), die aus einem zweiten Material gebildet ist, umfassend eine Eintrittsoberfläche (221), die konfiguriert ist, um Strahlung von der Austrittsoberfläche (212) der ersten Linse zu empfangen, und eine Austrittsoberfläche (222);
eine dritte Linse (240), die aus einem dritten Material gebildet ist, umfassend eine Eintrittsoberfläche (241), die konfiguriert ist, um Strahlung von der Austrittsoberfläche (222) der zweiten Linse zu empfangen, und eine Austrittsoberfläche (242);
einen gemeinsamen optischen Zug für das erste Wellenband und ein zweites Wellenband, wobei der gemeinsame optische Zug eine Öffnung aufweist, die dem ersten Element, dem zweiten Element und dem dritten Element gemeinsam ist; und
eine gemeinsame Fokalebene (260) für das erste Wellenband und ein zweites Wellenband,
wobei das erste Wellenband im Bereich von 0,9 $\mu$m und 1,7 $\mu$m liegt und das zweite Wellenband im Bereich von 8 $\mu$m und 12,0 $\mu$m liegt, sich Weitwinkel auf ein Sichtfeld von mindestens 30 Grad bezieht, das zweite Material Diamant umfasst und als Hauptverstärker der positiven, optischen Leistung der ersten, zweiten und dritten Linse wirkt, und das erste Material, das zweite Material und das dritte Material unterschiedliche Materialien sind, wobei die erste Linseneintrittsoberfläche (211) asphärisch ist;
die erste Linsenaustrittsoberfläche (212) asphärisch ist;
die dritte Linseneintrittsoberfläche (241) asphärisch ist;
die dritte Linsenaustrittsoberfläche (242) asphärisch ist; und
wobei die zweite Linseneintrittsoberfläche (221) sphärisch ist und/oder die zweite Linsenaustrittsoberfläche (222) sphärisch ist.

2. Vorrichtung (100, 200, 300) nach Anspruch 1, wobei mindestens eine von der zweiten Linseneintrittsoberfläche (221) und der zweiten Linsenaustrittsoberfläche (222) asphärisch ist.

3. Vorrichtung (100, 200, 300) nach einem der vorstehenden Ansprüche, weiter umfassend ein Gehäuse (580), das konfiguriert ist, um die erste Linse (210), die zweite Linse (220) und die dritte Linse (240) zu montieren.

4. Vorrichtung (100, 200, 300) nach Anspruch 3, wobei das Gehäuse (580) einen ersten Spalt zwischen der ersten Linse (210) und der zweiten Linse (220) und einen zweiten Spalt zwischen der zweiten Linse (220) und der dritten Linse (240) bereitstellt.

5. Vorrichtung (100, 200, 300) nach einem der vorstehenden Ansprüche, wobei Paarungen für das erste Material und das dritte Material eine der Gruppen von Materialpaarungen umfassen, einschließlich GaAs/Infrarot-Chalkogenidglas (IR-Chalkogenid), GaAs/ZnSe, ZnSe/GaAs, ZnSe/IR-Chalkogenid, ZnS/GaAs, ZnS/IR-Chalkogenid und ZnS/ZnSe.

6. Vorrichtung (100, 200, 300) nach Anspruch 4, wobei ein Medium in dem ersten Spalt und/oder dem zweiten Spalt Luft umfasst.

7. Vorrichtung (100, 200, 300) nach einem der vorstehenden Ansprüche, wobei sich die chromatischen Eigenschaften von zwei der Gruppe, bestehend aus dem ersten Material, dem zweiten Material und dem dritten Material, verbinden, um ein imaginäres Material mit Dispersionseigenschaften zu bilden, die das verbleibende Material der Gruppe ergänzen.

8. Vorrichtung (100, 200, 300) nach einem der vorstehenden Ansprüche, wobei das erste Wellenband und das zweite Wellenband nicht zusammenhängend sind.

9. Vorrichtung (100, 200, 300) nach einem der vorstehenden Ansprüche, wobei die zweite Linse (220) eine zusammengesetzte Linse ist, die ein erstes Stück und ein zweites Stück umfasst.

10. Verfahren zum Bilden einer multispektralen optischen Weitwinkel-Brechungsvorrichtung (100, 200, 300) zum Fokussieren von Licht aus einem ersten Wellenband-Kurzwelleninfrarot, umfassend eine minimale Wellenlänge $\lambda_{min}$, und einem nicht überlappenden zweiten Wellenband-Langwelleninfrarot, umfassend eine maximale Wellenlänge $\lambda_{max}$ auf einer gemeinsamen Fokalebene, umfassend die folgenden Schritte:

Auswählen eines ersten Materials für eine erste Linse und Auswählen eines dritten Materials für eine dritte Linse basierend auf $\lambda_{min}$ und $\lambda_{max}$,
Bilden der ersten Linse (210) aus dem ersten Material, umfassend eine Eintrittsoberfläche und eine Austrittsoberfläche;
Bilden einer zweiten Linse (220), umfassend eine Eintrittsoberfläche und eine Austrittsoberfläche aus einem zweiten Material; und
Bilden der dritten Linse (240), umfassend eine Eintrittsoberfläche und eine Austrittsoberfläche aus dem dritten Material,
wobei $\lambda_{min}$ kleiner als $\lambda_{max}$ ist und das erste Wellenband im Bereich von 0,9 $\mu$m und 1,7 $\mu$m liegt und das zweite Wellenband im Bereich von 8 $\mu$m und 12,0 $\mu$m liegt, sich Weitwinkel auf ein Sichtfeld von mindestens 30 Grad bezieht, das zweite Material Diamant umfasst und als Hauptverstärker der positiven, optischen Leistung der ersten, zweiten und dritten Linse wirkt, und das erste und das dritte Material ausgewählt werden, um zusammen mit dem zweiten Material, das erste und das zweite Wellenband auf eine gemeinsame Fokalebene (260) zu fokussieren,
wobei die erste Linseneintrittsoberfläche (211) und/oder die dritte Linseneintrittsoberfläche (241) eine asphärische Eintrittsoberfläche umfassen und die erste Linsenaustrittsoberfläche (212) und/oder die zweite Linsenaustrittsoberfläche (222) eine asphärische Austrittsoberfläche umfassen; oder die zweite Linseneintrittsoberfläche (221) sphärisch ist und/oder die zweite Linsenaustrittsoberfläche (222) sphärisch ist.

11. Verfahren nach Anspruch 10, wobei das Auswählen des ersten und/oder dritten Materials weiter das Bestimmen einer Abbe-Zahl V mit der folgenden Gleichung umfasst

$$V = \left( \frac{n_{\lambda,mid} - 1}{n_{\lambda,min} - n_{\lambda,max}} \right)$$

wobei $n_{\lambda,mid}$ ein Brechungsindex des Materials bei einem harmonischen Mittelwert Amid von Amin und $\lambda_{max}$ ist und $n_{\lambda,min}$ ein Brechungsindex des Materials bei Amin und $n_{\lambda,max}$ ein Brechungsindex des Materials bei $\lambda_{max}$ ist.

12. Verfahren nach Anspruch 11, wobei das Auswählen des ersten und/oder dritten Materials weiter das Bestimmen einer Teildispersion $P_{\lambda}$ des Materials zwischen einer Wellenlänge A und $\lambda_{min}$ mit der folgenden Gleichung umfasst

$$P_{\lambda} = \left( \frac{n_{\lambda,min} - n_{\lambda}}{n_{\lambda,min} - n_{\lambda,max}} \right)$$

13. Verfahren nach einem der Ansprüche 10-12, wobei das erste Wellenband ein Kurzwellen-Infrarotwellenband umfasst und das zweite Wellenband ein Langwellen-Infrarotwellenband umfasst.

14. Verfahrens nach einem der Ansprüche 10-13, wobei Paarungen für das erste Material und das dritte Material eine der Gruppen von Materialpaarungen umfassen, einschließlich GaAs/Infrarot-Chalkogenidglas (IR-Chalkogenid), GaAs/ZnSe, ZnSe/GaAs, ZnSe/IR-Chalkogenid, ZnS/GaAs, ZnS/IR-Chalkogenid und ZnS/ZnSe.

15. Verfahren nach einem der Ansprüche 10-14, wobei das erste Wellenband und das zweite Wellenband nicht zusammenhängend sind.

## Revendications

1. Dispositif optique de réfraction à grand angle multispectral réfractif (100, 200, 300) pour focaliser de la lumière à partir d'une première bande d'onde d'infrarouge à onde courte présentant une longueur d'onde minimum $\lambda_{min}$, et une seconde bande d'onde d'infrarouge à onde longue non chevauchante présentant une longueur d'onde maximum $\lambda_{max}$, comprenant :

   une première lentille (210) formée d'un premier matériau comprenant une surface d'entrée (211), configurée pour recevoir un rayonnement incident, et une surface de sortie (212) ;
   une deuxième lentille (220) formée d'un deuxième matériau comprenant une surface d'entrée (221), configurée pour recevoir un rayonnement de la surface de sortie (212) de la première lentille, et une surface de sortie (222) ;
   une troisième lentille (240) formée d'un troisième matériau comprenant une surface d'entrée (241), configurée pour recevoir un rayonnement de la surface de sortie (222) de la deuxième lentille, et une surface de sortie (242) ;
   un train otique partagé pour la première bande d'onde et une seconde bande d'onde, le train optique partagé présentant une ouverture commune au premier élément, au deuxième élément et au troisième élément ; et
   un plan focal commun (260) pour la première bande d'onde et une seconde bande d'onde,
   dans lequel la première bande d'onde est dans la plage de 0,9 $\mu$m et 1,7 $\mu$m et la seconde bande d'onde est dans la plage de 8 $\mu$m et 12,0 $\mu$m, le grand angle se réfère à un champ de vision d'au moins 30 degrés, le second matériau comprend du diamant et agit comme un contributeur de puissance optique positif principal des première, deuxième et troisième lentilles, et le premier matériau, deuxième matériau, et troisième matériau sont des matériaux différents, dans lequel la surface d'entrée de la première lentille (211) est asphérique ;
   la surface de sortie de la première lentille (212) est asphérique ;
   la surface d'entrée de la troisième lentille (241) est asphérique ;
   la surface de sortie de la troisième lentille (242) est asphérique ; et
   dans lequel la surface d'entrée de la deuxième lentille (221) est sphérique et/ou la surface de sortie de la deuxième lentille (222) est sphérique.

2. Dispositif (100, 200, 300) selon la revendication 1, dans lequel au moins une de la surface d'entrée de la deuxième lentille (221) et la surface de sortie de la deuxième lentille (222) est asphérique.

3. Dispositif (100, 200, 300) selon l'une quelconque des revendications précédentes, comprenant en outre un logement (580) configuré pour le montage de la première lentille (210), la deuxième lentille (220) et la troisième lentille (240).

4. Dispositif (100, 200, 300) selon la revendication 3, dans lequel le logement (580) fournit une première fente entre la première lentille (210) et la deuxième lentille (220), et une seconde fente entre la deuxième lentille (220) et la troisième lentille (240).

5. Dispositif (100, 200, 300) selon l'une quelconque des revendications précédentes, dans lequel des appariements pour le premier matériau et le troisième matériau comprennent un du groupe d'appariements de matériau comportant du GaAs/verre de chalcogénure infrarouge (chalcogénure IR), du GaAs/ZnSe, du ZnSe/GaAs, du ZnSe/chalcogénure IR, du ZnS/GaAs, ZnS/chalcogénure IR, et du ZnS/ZnSe.

6. Dispositif (100, 200, 300) selon la revendication 4, dans lequel un milieu dans la première fente et/ou la seconde fente comprend de l'air.

7. Dispositif (100, 200, 300) selon l'une quelconque des revendications précédentes, dans lequel les propriétés chromatiques de deux du groupe composé du premier matériau, du deuxième matériau et du troisième matériau se combinent pour former un matériau imaginaire avec des caractéristiques de dispersion qui complètent le matériau restant du groupe.

**8.** Dispositif (100, 200, 300) selon l'une quelconque des revendications précédentes, dans lequel la première bande d'onde et la seconde bande d'onde ne sont pas contiguës.

**9.** Dispositif (100, 200, 300) selon l'une quelconque des revendications précédentes, dans lequel la deuxième lentille (220) est une lentille composite comprenant une première pièce et une seconde pièce.

**10.** Procédé de formation d'un dispositif optique de réfraction à grand angle multispectral (100, 200, 300) pour focaliser de la lumière à partir d'un première bande d'onde d'infrarouge à onde courte comprenant une longueur d'onde minimum $\lambda_{min}$, et une seconde bande d'onde d'infrarouge à onde longue comprenant une longueur d'onde maximum $\lambda_{max}$ sur un plan focal commun, comprenant les étapes de :

la sélection d'un premier matériau pour une première lentille et la sélection d'un troisième matériau pour une troisième lentille sur la base de $\lambda_{min}$ et $\lambda_{max}$ ;
la formation de la première lentille (210) à partir du premier matériau comprenant une surface d'entrée et une surface de sortie ;
la formation d'une deuxième lentille (220) comprenant une surface d'entrée et une surface de sortie à partir d'un deuxième matériau ; et
la formation de la troisième lentille (240) comprenant une surface d'entrée et une surface de sortie à partir du troisième matériau,
dans lequel $\lambda_{min}$ est inférieur à $\lambda_{max}$, et la première bande d'onde est dans la plage de 0,9 $\mu$m et 1,7 $\mu$m et la seconde bande d'onde est dans la plage de 8 $\mu$m et 12,0 $\mu$m, le grand angle se réfère à un champ de vision d'au moins 30 degrés, le second matériau comprend du diamant et agit comme un contributeur de puissance optique positif principal des première, deuxième et troisième lentilles, et les premier et troisième matériaux sont sélectionnés pour, avec le deuxième matériau, focaliser la première et la seconde bande d'onde sur un plan focal commun (260),
dans lequel la surface d'entrée de la première lentille (211) et/ou la surface d'entrée de la troisième lentille (241) comprend une surface d'entrée asphérique, et la surface de sortie de la première lentille (212) et/ou la surface de sortie de la deuxième lentille (222) comprend une surface de sortie asphérique ; ou la surface d'entrée de la deuxième lentille (221) est sphérique et/ou la surface de sortie de la deuxième lentille (222) est sphérique.

**11.** Procédé selon la revendication 10, dans lequel ladite sélection du premier et/ou troisième matériau comprend en outre la détermination d'un nombre d'abbe V avec l'équation

$$V = \left( \frac{n_{\lambda,mid} - 1}{n_{\lambda,min} - n_{\lambda,max}} \right)$$

dans lequel $n_{\lambda,mid}$ est un indice de réfraction du matériau à une moyenne harmonique $\lambda_{mid}$ de $\lambda_{min}$ et $\lambda_{max}$, $n_{\lambda,min}$ est un indice de réfraction du matériau à Amin, et $n_{\lambda,max}$ est un indice de réfraction du matériau à $\lambda_{max}$.

**12.** Procédé selon la revendication 11, dans lequel ladite sélection du premier et/ou troisième matériau comprend en outre la détermination d'une dispersion partielle $P_\lambda$ du matériau entre une longueur d'onde A et $\lambda_{min}$ avec l'équation

$$P_\lambda = \left( \frac{n_{\lambda,min} - n_\lambda}{n_{\lambda,min} - n_{\lambda,max}} \right).$$

**13.** Procédé selon l'une quelconque des revendications 10-12, dans lequel la première bande d'onde comprend une bande d'onde d'infrarouge à onde courte, et la seconde bande d'onde comprend une bande d'onde d'infrarouge à onde longue.

**14.** Procédé selon l'une quelconque des revendications 10-13, dans lequel des appariements pour le premier matériau et le troisième matériau comprennent un du groupe d'appariements de matériau comportant du GaAs/verre de chalcogénure infrarouge (chalcogénure IR), du GaAs/ZnSe, ZnSe/GaAs, ZnSe/chalcogénure IR, du ZnS/GaAs, ZnS/chalcogénure IR, et du ZnS/ZnSe.

15. Procédé selon l'une quelconque des revendications 10-14, dans lequel la première bande d'onde et la seconde bande d'onde ne sont pas contiguës.

100

115        125        145

105    110    120    140

160

**FIG. 1**

**FIG. 2**

**FIG. 3**

FIG. 4A   LW Partial Dispersion Chart (8.0 to 12.0 microns)

FIG. 4B   SW Partial Dispersion Chart (0.9 to 1.7 microns)

Areas of the P-V chart which applicable for materials 1 and 3

500

580

590

210

320 330

240

260

580

**FIG. 5**

select a first material for a first lens and a third material for a third lens based upon a first waveband having a minimum wavelength $\lambda_{min}$, and a second waveband having a maximum wavelength $\lambda_{max}$
610

form the first lens from the first material having an ingress surface and an egress surface
620

form a second lens having an ingress surface and an egress surface from a second material (diamond)
630

form the third lens having an ingress surface and an egress surface from the third material
640

600

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014139926 A1

**Non-patent literature cited in the description**

- **THOMPSON.** Optical design of common aperture, common focal plane, multispectral optics for military applications. *Optical Engineering,* 2013, vol. 52 (6), 061308